# EUROPÄISCHE PATENTANMELDUNG

(11) **EP 1 108 947 A1**
(43) Veröffentlichungstag der Anmeldung: **20.06.2001**
(21) Anmeldenummer: 00127364.8
(22) Anmeldetag: 13.12.2000
(51) Int. Cl.: F17C 7/00, F17C 13/00, F17C 13/08, F17C 13/12

(54) **Vorrichtung zur Entnahme eines Fluides aus einem Speicherbehälter**

(30) Priorität: 17.12.1999 DE 19961080
(71) Anmelder: Linde Gas Aktiengesellschaft, 82049 Höllriegelskreuth (DE)
(72) Erfinder: Vogt, Walter, Dipl.-Ing., 82362 Weilheim (DE); Helmschrott, Rolf-Harald, 82538 Geretsried (DE)
(74) Vertreter: Gellner, Bernd, Dr.

(57) **Zusammenfassung**

Die Erfindung betrifft eine Vorrichtung zur Entnahme eines Fluides, insbesondere eines verdichteten Gases, aus einem Speicherbehälter. In der Entnahmeleitung (1) für das Gas ist ein Absperrventil (2) angeordnet, welches über eine Steuerleitung (3A) druckbetätigbar ist und mittels eines Notlöseventils (8, 9) geschlossen werden kann. Ferner bezieht sich die Erfindung auf ein Fahrzeug mit einem Speicherbehälter, an den eine Entnahmeleitung (1) mit einem Absperrventil (2) angeschlossen ist, wobei das Fahrzeug eine Druckluftversorgung (15) aufweist. Das Absperrventil (2) ist über ein pneumatisches Steuersystem druckbetätigbar, welches mit Druckluft von der Druckluftversorgung (4, 15) beaufschlagbar ist.

## Beschreibung

Die Erfindung betrifft ein Fahrzeug zum Transport eines Fluides, insbesondere eines verdichteten Gases, mit einem Speicherbehälter, an den eine Entnahmeleitung mit einem Absperrventil angeschlossen ist, wobei das Fahrzeug eine Druckluftversorgung aufweist. Ferner betrifft die Erfindung eine Vorrichtung zur Entnahme eines Fluides, insbesondere eines verdichteten Gases, aus einem Speicherbehälter mit einer Entnahmeleitung, in der ein Absperrventil angeordnet ist.

Bei der Entnahme von verdichteten Gasen kann es beispielsweise infolge eines Risses im Entnahmeschlauch zu einem unerwünschten Gasaustritt kommen, der insbesondere bei leicht entzündlichen Gasen eine bedeutende Gefahrenquelle darstellt. Es müssen daher Vorkehrungen getroffen werden, daß bei einem derartigen Störfall der austretende Gasstrom schnell unterbrochen werden kann.

Bei den bekannten Fahrzeugen zum Transport von Gasen werden die Absperrarmaturen, über die der Gasfluß durch den Entnahmeschlauch gesteuert wird, ausschließlich von einem Armaturenschrank aus bedient, der sich in der Nähe des Entnahmeschlauches befindet. Bei einem Störfall ist daher eine Gefährdung des Bedienpersonals nicht ausgeschlossen.

In der EP-A-0 926 427 ist ein System zur Entnahme eines Gases aus einem Speicherbehälter beschrieben, welches bei einem Störfall eine Unterbrechung des Gasflusses hervorruft. Hierzu ist in der Entnahmeleitung aus dem Speicherbehälter ein Absperrventil angeordnet, welches über eine Fernbedienung steuerbar ist. Das System ist so ausgeführt, daß das Absperrventil automatisch geschlossen wird, sofern nicht innerhalb einer vorgegebenen Zeitspanne ein Signal von der Fernbedienung empfangen wird. Die für den Empfang des Signals und für die Steuerung des Absperrventils notwendigen elektrischen Komponenten können jedoch beim Austritt von explosiven Gasen zu einem Brand oder einer Explosion führen.

Aufgabe vorliegender Erfindung ist es, ein Transportfahrzeug sowie eine Vorrichtung der eingangs genannten Art bereitzustellen, die eine sichere Unterbrechung des aus dem Speicherbehälter über die Entnahmeleitung ausströmenden Fluides ermöglichen.

Zur Lösung dieser Aufgabe ist bei einem derartigen Fahrzeug erfindungsgemäß das Absperrventil über ein pneumatisches Steuersystem druckbetätigbar, wobei das pneumatische Steuersystem eine Steuerleitung umfaßt, die mit Druckluft von der Druckluftversorgung beaufschlagbar ist.

Das erfindungsgemäße Fahrzeug zum Fluidtransport besitzt ein pneumatisch betätigbares Absperrventil zum Schließen der Entnahmeleitung. Das Absperrventil wird mit Druckluft von einer fahrzeugeigenen Druckluftversorgung beaufschlagt. Zur Betätigung des Absperrventils wird daher keine Fremdenergie benötigt, sodaß das Absperrventil unabhängig von den äußeren Gegebenheiten, insbesondere ohne daß auf Seiten des Verbrauchers spezielle Installationen erforderlich wären, geöffnet und geschlossen werden kann. Die erfindungsgemäß gewählte Energieversorgung für das Absperrventil, nämlich über einen fahrzeugeigenen Druckluftvorrat, schließt die bei einem elektrischen System, wie dem aus der oben genannten EP-A-0 926 427, vorhandene Explosionsgefahr aus.

Vorzugsweise ist das Absperrventil so ausgeführt, daß es sich bei druckloser Steuerleitung im geschlossenen Zustand befindet. Auf diese Weise wird sichergestellt, daß bei einer Störung in dem pneumatischen Steuersystem, d.h. in der Steuerleitung oder in einer der daran angeschlossenen Komponenten, die zu einem Druckverlust in der Steuerleitung führt, das Ventil automatisch geschlossen und der durch die Entnahmeleitung fließende Gasstrom unterbrochen wird.

Die Druckluftversorgung des pneumatischen Steuersystems, d.h. der Steuerleitung, des Absperrventils und gegebenenfalls weiterer angeschlossener Komponenten, erfolgt vorzugsweise über die Druckluftbremsanlage des Fahrzeugs. Von Vorteil ist die Steuerleitung über ein Überström- und Rückschlagventil, insbesondere über ein federbelastetes Rückschlagventil, mit dem Druckluftkreislauf der Bremsanlage verbunden. Das Überström- und Rückschlagventil sorgt dafür, daß der Druck in der Steuerleitung immer dem maximalen Druck in der Vorratsleitung der Druckluftbremsanlage des Fahrzeugs entspricht.

Es ist vorteilhaft, wenn ein Notlöseventil zur Druckentlastung der Steuerleitung vorgesehen ist. Bei einem Störfall kann durch Auslösen des Notlöseventils der Druck in der Steuerleitung abgebaut werden. Nach kurzer Zeit - je nach Dimensionierung des pneumatischen Steuersystems etwa 1 bis 3 Sekunden - ist der Druck auf einen Wert abgefallen, bei dem das Absperrventil die Entnahmeleitung schließt. Durch Betätigung des Notlöseventils wird so ein schnelles und sicheres Absperren der Entnahmeleitung erzielt.

In einer bevorzugten Ausführungsform ist die Steuerleitung mit einem Druckluftspeicher verbunden. Der Druckluftspeicher gewährleistet, daß der Druck in der Steuerleitung auch über längere Zeit aufrechterhalten bleibt, selbst wenn aufgrund von Porösitäten oder kleinen Lecks geringe Mengen Luft aus dem pneumatischen Steuersystem entweichen. Zum anderen ermöglicht der Druckluftspeicher mehrere Betätigungszyklen des Absperrventils, d.h. das Absperrventil kann ohne eine zusätzliche Luftversorgung mehrfach geöffnet und wieder geschlossen werden.

Störungen in dem pneumatischen Steuersystem könnten zur Folge haben, daß sich das Absperrventil durch Druckbeaufschlagung nicht mehr öffnen läßt. In diesem Fall wäre eine Gasentnahme aus dem Speicherbehälter nicht möglich. Das Entnahmeventil ist daher außer durch Anlegen eines geeigneten Druckes in der Steuerleitung vorzugsweise auch manuell betätigbar. Beispielsweise ist hierzu an dem pneumatischen Betätigungselement des Absperrventils eine Notbedienung vorgesehen, die sich mit Hilfe eines geeigneten Werkzeuges bedienen läßt.

Es hat sich als günstig erwiesen, wenn an die Steuerleitung eine insbesondere dünnwandige Sicherheitsleitung angeschlossen ist, die in der Nähe der Entnahmeleitung verläuft. Die Sicherheitsleitung wird vorzugsweise parallel zur Entnahmeleitung oder wendelförmig um die Entnahmeleitung herum geführt. Die Sicherheitsleitung ist an die Steuerleitung angeschlossen und wird mit Steuerdruck aus dem pneumatischen Steuersystem beaufschlagt. Verbraucherseitig ist die Sicherheitsleitung von Vorteil verschlossen.

In einer anderen Ausführungsform bilden die Steuerleitung selbst oder ein Teil von dieser die Sicherheitsleitung. In diesem Fall zweigt die Sicherheitsleitung nicht von der Steuerleitung ab, sondern ist ein Teil von deren Länge. Wesentlich ist nicht die Anordnung der Sicherheitsleitung in bezug auf die Steuerleitung, sondern daß beide Leitungen so miteinander verbunden sind, daß eine Druckänderung in der Sicherheitsleitung eine Druckänderung in der Steuerleitung nach sich zieht.

Falls eine Störung im Bereich der Entnahmeleitung auftritt, beispielsweise ein Feuer oder ein Leitungsabriß, reißt die Sicherheitsleitung, die aus geeignetem Material und entsprechend dünnwandig ausgeführt ist, ebenfalls ab oder schmilzt. Die in dem pneumatischen Steuersystem befindliche Luft entweicht über das entstandene Leck und löst aufgrund des entstehenden Druckabfalls in der Steuerleitung das Absperrventil aus, welches die Entnahmeleitung verschließt. Bei einem Bruch der Entnahmeleitung oder einem Brand wird so durch Abreißen bzw. Schmelzen der Sicherheitsleitung der durch die Entnahmeleitung strömende Gasfluß selbständig unterbrochen. Insbesondere durch die Kombination des Notlöseventils und der Sicherheitsleitung in dem pneumatischen Steuersystem wird die Sicherheit für das Bedienpersonal und die Anlage deutlich erhöht.

In einer besonders vorteilhaften Ausführungsform ist an das pneumatische Steuersystem eine Fembedienleitung angeschlossen, die mit einer Vorrichtung zur Beeinflussung des Drucks in dem pneumatischen Steuersystem versehen ist. Eine derartige Vorrichtung kann sowohl zur Erzeugung eines Druckabfalls als auch zur Druckerhöhung im Steuersystem dienen. Es ist sinnvoll, an die Fernbedienleitung ein oder mehrere weitere Notlöseventile anzuschließen, die entweder per Hand oder ferngesteuert betätigbar sind. Auf diese Weise kann der Gasfluß durch die Entnahmeleitung auch von der Anlage des Verbrauchers, der mit diesem Gas versorgt wird, unterbrochen werden, wenn beispielsweise die Störung nicht am Gastransportfahrzeug oder an der Entnahmeleitung, sondern in der Anlage des Verbrauchers auftritt.

Wenn ein Gastransportfahrzeug länger beim Kunden stehen soll, kann es vorkommen, daß durch poröse Leitungen oder Lecks der Druck im Steuersystem langsam abgebaut wird. In diesem Fall kann es günstig sein, wenn an das pneumatische Steursystem eine Vorrichtung angeschlossen wird, welche stets eine geringe Menge Luft in das Steuersystem einspeist, sodaß der zum Öffnen des Absperrventils notwendige Druck im Steuersystem aufrechterhalten bleibt. Die so pro Zeiteinheit eingespeiste Luftmenge muß jedoch geringer sein als die bei einem Störfall durch Betätigung des Notlöseventils oder infolge des Abreißens der Sicherheitsleitung ausströmende Luftmenge, damit die automatische Absperrung des Entnahmeventils erhalten bleibt.

Die unterschiedlichen Bezeichnungen Steuerleitung, Sicherheitsleitung und Fernbedienleitung beziehen sich jeweils auf die Funktion der Leitung, setzen aber nicht zwingend voraus, daß diese Funktionen auf verschiedene Leitungen verteilt sind. Die genannten Funktionen können, wie im Zusammenhang mit der Sicherheitsleitung bereits erwähnt, auch durch eine einzige Leitung realisiert werden.

Die Erfindung bezieht sich auch auf eine Vorrichtung zur Entnahme eines Fluides, insbesondere eines verdichteten Gases, aus einem Speicherbehälter mit einer Entnahmeleitung, in der ein Absperrventil angeordnet ist.

Erfindungsgemäß ist bei einer derartigen Vorrichtung das Absperrventil über eine Steuerleitung druckbetätigbar, wobei das Absperrventil bei druckloser Steuerleitung geschlossen ist. Ferner sind Mittel zur Beaufschlagung der Steuerleitung mit Druck sowie ein Notlöseventil zur Druckentlastung der Steuerleitung vorgesehen. In einer bevorzugten Ausführungsform ist die Steuerleitung mit einem Speicher für ein Druckmedium, insbesondere für Druckluft, verbunden.

Die Erfindung hat wesentliche Vorteile gegenüber dem Stand der Technik. So ermöglicht die Erfindung eine Unterbrechung des Abtankvorganges, d.h. der Gasentnahme aus dem Speicherbehälter, aus sicherer Entfernung von den das Gas führenden Komponenten. Die Abschaltung erfolgt pneumatisch und aus Gründen des Explosionsschutzes ohne elektrische Komponenten. Gefahren, die ansonsten von unter Hochdruck stehenden Gasentnahmeleitungen, insbesondere Schläuchen, ausgehen, werden abgewendet. Zur Betätigung des Absperrventils wird keine Fremdenergie benötigt, da die Druckluft für die Steuerung aus dem fahrzeugeigenen Druckluftvorrat stammt. Das Steuersystem ist daher permanent verfügbar und nicht auf weitere externe Installationen angewiesen. Die Erfindung eignet sich sowohl für die Entnahme von Flüssigkeiten als auch Gasen aus einem Speicherbehälter. Insbesondere bei der Entnahme von verdichteten Gasen, und ganz besonders bei der Entnahme von explosiven oder leicht entzündlichen Fluiden, schafft die Erfindung eine deutlich höhere Sicherheit.

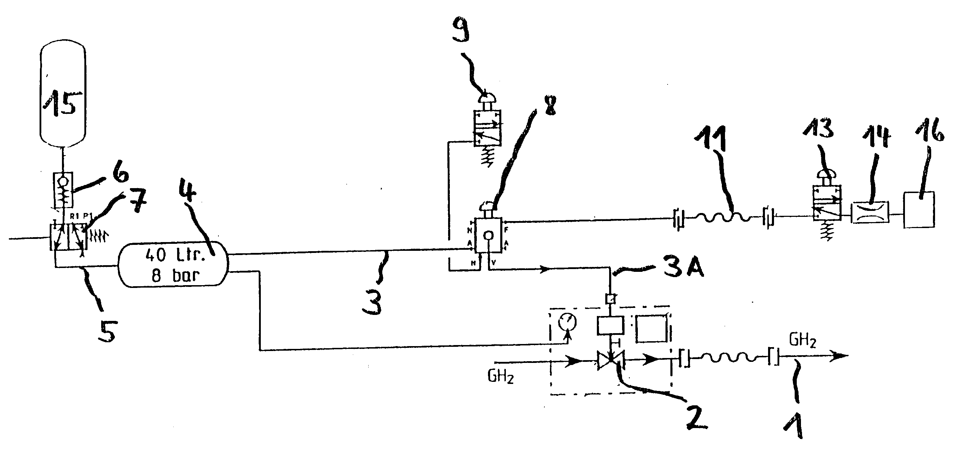

Die Erfindung sowie weitere Einzelheiten der Erfindung werden im folgenden anhand von dem in der Zeichnung dargestellten Ausführungsbeispiel näher erläutert. Hierbei zeigt die einzige Figur schematisch die erfindungsgemäße Entnahmevorrichtung.

Das in der Figur dargestellte System ist in ein Fahrzeug zum Transport von Wasserstoff unter 200 bar Druck eingebaut.

Der verdichtete Wasserstoff befindet sich in einem nicht dargestellten Speicherbehälter und kann über die Entnahmeleitung 1 entnommen werden. Die Entnahmeleitung 1 ist mittels eines pneumatisch betätigbaren Kugelhahnes 2 verschließbar. Der Kugelhahn 2 ist hierzu über eine Steuerleitung 3, 3A an einen Druckluftbehälter 4 angeschlossen, der ein Volumen von 40 Liter besitzt. Die Versorgung des Druckluftbehälters 4 mit Druckluft erfolgt über die Druckluftbremsanlage 15 des Fahrzeugs, an das der Behälter 4 über Leitung 5 angeschlossen ist. In der Leitung 5 sind ein federbeaufschlagtes Rückschlagventil 6 sowie ein druckgesteuertes 3/2-Wege-Ventil 7 angeordnet. Durch das Überströmventil 6 wird sichergestellt, daß der Druck im Behälter 4 immer dem maximalen Druck in der Druckluftbremsanlage 15, in der Regel 8 bar, entspricht. Das 3/2-Wege-Ventil 7 verschließt das pneumatische Steuersystem, wenn die Druckluftbremsanlage 15 nicht an das 3/2-Wege-Ventil 7 angeschlossen ist und verhindert so zusätzlich, daß Luft aus dem pneumatischen Steuersystem ausströmt. Sobald die Druckluftbremsanlage 15 an das 3/2-Wege-Ventil 7 angekoppelt wird, öffnet das Ventil 7 automatisch und stellt die Verbindung zwischen der Druckluftbremsanlage 15 und dem Druckluftbehälter 4 her, sodaß der Behälter 4 bei Bedarf automatisch gefüllt wird.

Im normalen Betriebszustand, und zwar unabhängig von der Tatsache, ob gerade Gas entnommen wird oder nicht, ist der Kugelhahn 2 über die Steuerleitungen 3 und 3A mit dem Druckluftbehälter 4 verbunden und wird mit Druck beaufschlagt. Der Kugelhahn 2 ist so ausgeführt, daß die Entnahmeleitung 1 für den gasförmigen Wasserstoff offen ist, solange der Kugelhahn 2 unter Druck steht. Im Normalzustand ist somit der Kugelhahn 2 geöffnet. Selbstverständlich ist die Entnahmeleitung 1, sofem kein Gas entnommen werden soll, über ein weiteres nicht dargestelltes Ventil verschlossen.

Das erfindungsgemäße System ist für den Störfall oder für Funktionsprüfungen mit einem Schnellschluß-System versehen. Hierzu sind in der Steuerleitung 3 zwei Notlöseventile 8, 9 vorgesehen, die sich vorne links am Fahrzeug beziehungsweise hinten rechts am Fahrzeug befinden. Durch Betätigung eines der beiden Notlöseventile 8, 9 wird ein Druckabfall in der Steuerleitung 3A zwischen dem Notlöseventil 8 und dem Kugelhahn 2 hervorgerufen, der innerhalb von 2 bis 3 Sekunden die Schließung des Kugelhahnes 2 bewirkt und den Gasstrom durch die Entnahmeleitung 1 unterbricht. Die beiden Notlöseventile 8 und 9 befinden sich, wie bereits erwähnt, an zwei entgegengesetzten Ecken des Fahrzeugs. Im Störfall kann so das Schließen des Kugelhahnes 2 aus sicherer Entfernung von der Entnahmeleitung 1 ausgelöst werden.

Durch Betätigung eines der beiden Notlöseventile 8, 9 wird die Steuerleitung 3 zwischen dem als Hauptsteuerventil arbeitenden Notlöseventil 8 unterbrochen und weitere Druckluftzufuhr von dem Druckbehälter 4 zum Kugelhahn 2 unterbunden. Ferner wird die Steuerleitung 3A gegen die Umgebung geöffnet, sodaß der Druck in der Steuerleitung 3A abgebaut wird und der Kugelhahn 2 geschlossen wird. Nachdem die Störung beseitigt ist oder nachdem der Funktionstest durchgeführt wurde, kann der Kugelhahn 2 wieder geöffnet werden. Hierzu wird das Notlöseventil 8 wieder in seine Ausgangsposition gebracht.

Störungen in dem pneumatischen Steuersystem könnten zur Folge haben, daß der Kugelhahn 2 dauernd geschlossen ist und somit ein Abtanken nicht möglich ist. Auf dem pneumatischen Betätigungselement des Kugelhahns 2 ist daher eine Notbedienung in Form eines Sechskantes vorgesehen. Die Notbetätigung läßt sich durch Drehen des Sechskantes mit Hilfe eines entsprechenden Werkzeuges, welches sich verplombt in dem Armaturenschrank befindet, gegen eine Federkraft öffnen und mittels einer Kette fixieren.

Als zusätzliche Sicherheitsmaßnahme ist an die Steuerleitung 3 außerdem ein dünnwandiges PA-Rohr 11 mit einem Durchmesser von 6 mm und einer Wandstärke von 1 mm als Sicherheitsleitung angeschlossen. Das Rohr 11 bildet eine Verzweigung der Steuerleitung 3A, ist jedoch am Ende verschlossen. In der Sicherheitsleitung 11 liegt somit im wesentlichen der gleiche Druck an wie in der Steuerleitung 3 bzw. 3A.

Das PA-Rohr 11 ist an der Entnahmeleitung 1 befestigt und wird parallel zu dieser geführt. Falls eine Störung im Bereich der Entnahmeleitung 1 auftritt, beispielsweise ein Brand, schmilzt oder reißt das Rohr 11. Dadurch entsteht in der Sicherheitsleitung 11 und in der mit dieser verbundenen Steuerleitung 3A jeweils ein Druckabfall, der das Auslösen des Kugelhahns 2 zur Folge hat. Innerhalb von wenigen Sekunden wird der Kugelhahn 2 geschlossen und der aus der Entnahmeleitung 1 ausströmende Gasfluß unterbrochen.

Das gesamte Schnellschluß-System, umfassend die Druckluftversorgung 4, den pneumatisch betätigbaren Kugelhahn 2, die Notlöseventile 8, 9 sowie die Steuer- und Sicherheitsleitungen 3, 3A und 11 ist mit dem Fahrzeug verbunden und permanent verfügbar.

In einer weiteren Ausbaustufe wird die Sicherheitsleitung 11 bis zum Verbraucher weitergeführt. Die Sicherheitsleitung 11 kann am Leitungsende entweder verschlossen sein oder es können beim Verbraucher an die Leitung 11 Einrichtungen 13 angeschlossen werden, die im Notfall oder bei Bedarf die Steuerleitung 3A bzw. die Sicherheitsleitung 11 druckentlasten. Hierfür können sowohl passive, wie zum Beispiel ein bei Hitze schmelzendes Rohr, als auch aktive Sicherheitskomponenten, wie zum Beispiel ein weiteres Notlöseventil 13, vorgesehen sein. Das Notlöseventil 13 kann handbetätigbar oder auch, beispielsweise von einer Leitwarte aus, ferngesteuert sein.

Falls das Fahrzeug länger beim Verbraucher steht, besteht die Gefahr, daß der Druck in der Steuerleitung 3, 3A langsam abfällt und der Kugelhahn 2 unbeabsichtigt schließt. An die Sicherheitsleitung 11 wird daher über eine Drossel 14 eine weitere Druckluftquelle 16 angeschlossen, aus der stets eine geringe Menge Luft in das pneumatische System 3, 3A, 11 strömt, um die schleichenden Druckverluste auszugleichen. Die zusätzliche Druckluftmenge muß allerdings geringer sein als die Menge Luft, die bei einem eventuellen Abreissen oder Schmelzen der Sicherheitsleitung 11 entweichen würde, um sicherzustellen, daß die erfindungsgemäße Schnellschluß-Funktion im Notfall gewahrt bleibt.

## Patentansprüche

1. Fahrzeug zum Transport eines Fluides, insbesondere eines verdichteten Gases, mit einem Speicherbehälter, an den eine Entnahmeleitung mit einem Absperrventil angeschlossen ist, wobei das Fahrzeug eine Druckluftversorgung aufweist, **dadurch gekennzeichnet**, daß das Absperrventil (2) über ein pneumatisches Steuersystem druckbetätigbar ist und daß das pneumatische Steuersystem mindestens eine Steuerleitung (3, 3A) umfaßt, die mit dem Absperrventil (2) verbunden ist und mit Druckluft von der Druckluftversorgung (4, 15) beaufschlagbar ist.

2. Fahrzeug nach Anspruch 1, dadurch gekennzeichnet, daß das Absperrventil (2) bei druckloser Steuerleitung (3, 3A) geschlossen ist.

3. Fahrzeug nach einem der Ansprüche 1 oder 2, dadurch gekennzeichnet, daß das Fahrzeug eine Druckluftbremsanlage (15) besitzt und daß die Druckluftversorgung des pneumatischen Steuersystems mittels der Druckluftbremsanlage (15) erfolgt.

4. Fahrzeug nach einem der Ansprüche 1 bis 3, dadurch gekennzeichnet, daß das pneumatische Steuersystem eine Vorrichtung zur Beeinflussung des Drucks, insbesondere ein Notlöseventil (8, 9), zur Druckentlastung des pneumatischen Steuersystems umfaßt.

5. Fahrzeug nach einem der Ansprüche 1 bis 4, dadurch gekennzeichnet, daß das pneumatische Steuersystem einen Druckluftspeicher (4) aufweist.

6. Fahrzeug nach Anspruch 5, dadurch gekennzeichnet, daß der Druckluftspeicher (4) durch ein Überströmventil (6) mit der Druckluftbremsanlage (15) verbunden ist.

7. Fahrzeug nach einem der Ansprüche 1 bis 6, dadurch gekennzeichnet, daß das druckbetätigbare Absperrventil (2) auch manuell betätigbar ist.

8. Fahrzeug nach einem der Ansprüche 1 bis 7, dadurch gekennzeichnet, daß das pneumatische Steuersystem eine Sicherheitsleitung (11) umfaßt, die in der Nähe der Entnahmeleitung (1) verläuft.

9. Fahrzeug nach Anspruch 8, dadurch gekennzeichnet, daß die Sicherheitsleitung (11) an einem Ende verschlossen ist.

10. Fahrzeug nach einem der Ansprüche 1 bis 9, dadurch gekennzeichnet, daß das pneumatische Steuersystem eine Fernbedienleitung (12) umfaßt, an die eine Vorrichtung (13) zur Beeinflussung des Drucks angeschlossen ist.

11. Vorrichtung zur Entnahme eines Fluides, insbesondere eines verdichteten Gases, aus einem Speicherbehälter mit einer Entnahmeleitung, in der ein Absperrventil angeordnet ist, **dadurch gekennzeichnet**, daß das Absperrventil (2) über eine Steuerleitung (3A) druckbetätigbar ist, wobei das Absperrventil (2) bei druckloser Steuerleitung (3A) geschlossen ist, und daß Mittel (4, 15) zur Beaufschlagung der Steuerleitung (3A) mit Druck sowie ein Notlöseventil (8, 9) zur Druckentlastung der Steuerleitung (3A) vorgesehen sind.

12. Vorrichtung nach Anspruch 11, dadurch gekennzeichnet, daß die Steuerleitung (3, 3A) mit einem Speicher (4) für ein Druckmedium, insbesondere für Druckluft, verbunden ist.
